# EUROPÄISCHE PATENTSCHRIFT

(11) **EP 2 336 628 B1**
(45) Veröffentlichungstag und Bekanntmachung des Hinweises auf die Patenterteilung: **27.03.2013**
(21) Anmeldenummer: 09015558.1
(22) Anmeldetag: 16.12.2009
(51) Int. Cl.: F16P 3/08, B04B 7/06, B60J 7/185, D06F 37/28, E05B 65/12, E05C 19/14, E05B 47/02

(54) **Verschlussverriegelung**
Lock fastener
Verrouillage de fermeture

(43) Veröffentlichungstag der Anmeldung: 22.06.2011
(73) Patentinhaber: EPPENDORF AG, 22339 Hamburg (DE)
(72) Erfinder: Marschner, Kai, 06116 Halle (DE); Grimm, Bert- Olaf, 04277 Leipzig (DE)
(74) Vertreter: Bockhorni & Kollegen

(56) Entgegenhaltungen:
- EP-A1- 1 092 828
- DE-A1- 10 015 010
- DE-A1- 19 614 122
- JP-A- 2008 194 595
- US-A1- 2006 119 108
- US-A1- 2008 305 938

## Beschreibung

Die vorliegende Erfindung bezieht sich auf eine Verschlussverriegelung, insbesondere auf die Verriegelung des Deckels einer Laborzentrifuge mit dem Gehäuse der Laborzentrifuge.

Zentrifugen, insbesondere Laborzentrifugen müssen hinsichtlich der Verriegelung des Zentrifugendeckels gegenüber dem Zentrifugengchäuse besonders sicher ausgeführt sein, um Gefahren zu vermeiden. Gefahren können hier durch ein ungewolltes Öffnen eines Zentrifugenderkels während des Betriebes entstehen, insbesondere durch den dann freiliegenden, sich derzeit üblicherweise mit bis zu 16.000 Umdrehungen pro Minute drehenden Rotor und durch die dann ebenfalls freiliegenden auf dem Rotor angeordneten Proben. Aber auch bei vielen anderen Vorrichtungen ist eine sichere Verschlussverriegelung zur Vermeidung von Unfällen erforderlich, beispielsweise bei Wäschetrocknern, Waschmaschinen und Türen, insbesondere Kofferraumdeckeln, von Kraftfahrzeugen.
Es ist bekannt, zum sicheren Halten eines Deckels an einem Gehäuse manuelle Verschlüsse zu verwenden. Derartige Verschlüsse sind aber insbesondere bei Zentrifugen nur sehr schwer zu bedienen.

Daher sind schon verschiedene fremdkraftbetriebene Verriegelungen entwickelt worden. Nachteilig an den bisher bekannten Verriegelungen mit Fremdkraftantrieben ist es aber, dass diese meist sehr kompliziert aufgebaut sind und außerdem mehrere Antriebe zur Sicherung der Funktionen der Verriegelung benötigen, nämlich beispielsweise einen Antrieb zum Betätigen des Verriegelungshakens und einen weiteren zur Betätigung einer Blockierung des Verriegelungshakens.

Aufgabe der vorliegenden Erfindung ist es daher, eine Verschlussverriegelung zu schaffen, die konstruktiv einfach aufgebaut ist, eine sichere Verriegelung auch unter hohen Lasten - wie sie beispielsweise bei Zentrifugen auftreten können - ermöglicht und wobei nicht verschiedene Antriebe zur Sicherung der Funktionen der Verschlussverriegelung erforderlich sind.

Diese Aufgabe wird gelöst mit einer Verschlussvcrriegelung nach Anspruch 1. Vorteilhafte Weiterbildungen sind in den abhängigen Unteransprüchen angegeben.

Die erfindungsgemäße Verriegelung eines Verschlusses, bevorzugt eines Verschlusses einer Zentrifuge, insbesondere einer Laborzentrifuge, umfasst mindestens ein Schließelement, das in einer Schließelementbewegungsrichtung bewegbar ist, und mindestens einen Antrieb zum Verstellen des Schließelements zwischen einer unverriegelten Position zur Versetzung des Verschlusses in einen unverriegelten Zustand und einer verriegelten Position zur Versetzung des Verschlusses in einen verriegelten Zustand, wobei der Antrieb in einer Antriebsbcwcgungsrichtung bewegbar angeordnet ist, wobei die Verriegelung einen blockierten Zustand aufweist, in dem das Schließelement gegenüber Bewegungen in Schließelementbewegungsrichtung blockiert ist, und zeichnet sich dadurch aus, dass das Schließelement an einem Abtrieb angeordnet ist, der in einer Abtriebsbewegungsrichtung bewegbar angeordnet ist und der mit dem Antrieb zumindest im blockierten Zustand in einem ersten formschlüssigen Eingriff steht, wobei der erste formschlüssige Eingriff so ausgebildet ist, dass er keine Bcwcgungsübertragung zwischen der Abtriebsbewegungsrichtung und der Antriebsbewegungsrichtung vermittelt, und wobei zwischen Antrieb und Abtrieb ein zweiter Form- und/oder Kraftschluss vorgeschen ist zur Vermittlung der Bewegungsübertragung zwischen der Abtriebsbewegungsrichtung und der Antriebsbewegungsrichtung, wobei der zweite Form- und/oder Kraftschluss zumindest im blockierten Zustand nicht besteht, so dass eine Selbstblockierung der Verriegelung zumindest im blockierten Zustand bewirkt wird.

Dabei ist mit Schließelementbewegungsrichtung die Richtung der Bewegung des Schließelements in Schließrichtung bzw. in Öffnungsrichtung gemeint. Mit Antricbsbewegungsrichtung und mit Abtriebsbewegungsrichtung sind jeweils die Richtungen der Bewegungen von Antrieb und Abtrieb gemeint, die diese vollziehen, wenn die Verriegelung bzw. Öffnung der Verriegelung bewirkt werden.

Durch die erfindungsgemäße Vorschung eines ersten Formschlusses zwischen Antrieb und Abtrieb der Verriegelung, der eine Selbstblockierung der Verrieglung bewirkt, ist die Verriegelung konstruktiv besonders einfach aufgebaut und dabei aber besonders sicher. Außerdem ist zur Betätigung des Abtriebs und der Blockierung nur ein Antrieb notwendig, da die Bewegungsübertragung zwischen Antrieb und Abtrieb über einen zweiten Form- und/oder Kraftschluss vermittelt wird, der aber nicht im blockierten Zustand vorliegt. Dies macht die Verriegelung nicht nur kostengünstig, sondern auch besonders sicher.

Die Selbstblockierung ist also dadurch ausgebildet, dass der Formschluss in Bezug auf die Bewegungsfreiheitsgrade des Abtriebs und des Antriebs so angeordnet und ausgebildet ist, dass eine Bewegung des Abtriebs nicht zu einer Bewegung des Antriebs führt und zusätzlich auch eine mindestens geringfügige Bewegung des Antriebs nicht zu einer Bewegung des Abtriebs führt.

Eine solche Verriegelung hält auch hohen Vibrations- und Crashenergien stand, wie sie beispielsweise bei Zentrifugen auftreten können, da Kraftcinwirkungen auf das Schließelement nicht zu einer Bewegung des Antriebs führen können.

Bei bisher gebräuchlichen Verriegelungen war dagegen der Antrieb als Zahnrad ausgebildet, das in ein korrespondierendes Zahnrad des Abtriebs eingriff, wie es beispielsweise in der DE 100 15 010 A1, die die Merkmale des Oberbegriffs des Anspruchs 1 zeigt, beschrieben ist, von der die vorliegende Erfindung ausgeht. Hierbei bestand zwar auch ein Formschluss, jedoch wirkte dieser nicht selbstblockierend, sondern nur hemmend, denn eine Bewegung des Abtriebs bewirkte auch im verriegelten Zustand eine Bewegung des Antriebs. Wenn der Antrieb direkt mit dem Fremdkraftantrieb gekoppelt war, dann musste diese Bewegung zwar gegen den Widerstand des Fremdkraftantriebs, beispielsweise eines Motors, erfolgen, jedoch lag keine Selbstblockierung vor. Bei hohen Crashenergien war eine solche Verriegelung deshalb nicht zuverlässig. Und umgekehrt bewirkte eine Bewegung des Antriebs, wie sie beispielsweise bei Vibrationen auftreten kann, eine Bewegung des Abtriebs.

Bevorzugt sind der Abtrieb um eine Abtriebsdrehachse und/oder der Antrieb um eine Antriebsdrehachse drehbar gelagert. Dann lassen sich besonders Platz sparende Verriegelung bereitstellen.

Besonders bevorzugt weist der Abtrieb einen Führungsschlitz für ein Hebelelement eines am Antrieb angeordneten Hcbelrades auf, wodurch der zweite Form- und/oder Kraftschluss bereitgestellt wird. Dann ist die Verriegelung konstruktiv besonders einfach aufgebaut. Vorteilhaft ist es dann, wenn der Führungsschlitz zumindest einen Bereich aufweist, der in Bezug auf die Bewegungsrichtung des Abtriebs zumindest einen nicht senkrecht verlaufenden Wandabschnitt aufweist. Dann werden besonders fließende Bewegungsabläufe ermöglicht, was die Verriegelung leichtgängiger und damit auch wartungsärmer macht. Durch verbesserte Hebelverhältnisse beim Verriegeln und Entriegeln ist zudem weniger Kraft erforderlich, so dass ein für die Vcrricgclung eingesetzter Fremdkraftantrieb drehmomentschwächer und somit auch kleiner dimensioniert werden kann.

Alternativ zu einer solchen Gestaltung des zweiten Form- und/oder Kraftschlusses mit Hebelelement und Führungsschlitz kann beispielsweise ein Kraftschluss in Form einer Reibkupplung vorgesehen sein oder ein Formschluss wird in Form eines Zahnstangenantriebs bereitgestellt. In allen Fällen ist sicherzustellen, dass der Form- und/oder Kraftschluss zumindest bei Erreichen des Blockierungszustandes ausklinkt, so dass eine Krafteinwirkung auf den Abtrieb nicht so auf den Antrieb übertragen werden kann, dass sich der Antrieb bewegt.

In einer vorteilhaften Ausgestaltung weist der Antrieb einen kreisbogenförmigen Abschnitt auf, der zur Ausbildung des ersten Formschlusses zumindest im verriegelten Zustand der Verriegelung in einen korrespondierenden Abschnitt des Abtriebs formschlüssig eingreift. Dadurch lässt sich ein besonders einfacher erster Formschluss und eine sehr sichere Arretierung erreichen. Dann ist es zweckmäßig, wenn zwischen Hebelelement und Antriebsdrehachse zumindest bereichsweise der Kreisbogen nicht ausgcbildct ist, so dass der Abtrieb zumindest zeitweise beim Übergang zwischen blockiertem Zustand und unverriegeltem Zustand nicht in dem ersten formschlüssigem Eingriff mit dem Antrieb steht.

In einer besonders bevorzugten Weiterbildung ist das Schließelement beweglich mit dem Abtrieb verbunden. Dadurch lassen sich vielfältige Verriegelungen umsetzen.

Dann ist es besonders vorteilhaft, wenn das Schließelement um eine Schließelementdrchachsc drehbeweglich an dem Abtrieb angeordnet ist, wobei Schließelementdrehachse und Abtriebsdrehachse nicht zusammenfallen, der Abtrieb ein Führungselement aufweist, das in ein konzentrisch zur Schließelementdrehachse angeordnetes Kurvensegment des Schließelements eingreift, und das Schließelement in Schließrichtung vorgespannt ist. Dadurch lässt sich neben der Verriegelung zeitgleich auch ein Heranziehen des Schließelements hin zum Antrieb bewirken. Dies ist vor allem bei Zentrifugen wünschenswert, wenn zwischen Zentrifugengehäuse und Deckel eine Dichtung vorgesehen ist, die den Austritt von zentrifugiertem Material aus dem Zcntrifugenbehälter verhindern soll.

Alternativ kann es auch vorgesehen sein, dass das Schließelement fest mit dem Abtrieb verbunden ist, insbesondere Teil des Abtriebs ist. Dann lassen sich konstruktiv besonders einfach aufgebaute Verriegelungen beispielsweise mit riegelförmigem Schließelement umsetzen, das direkt Teil des Abtriebs ist.

In einer besonders zweckmäßigen Weiterbildung ist dem Antrieb zumindest ein Endlagenschalter zugeordnet, den der Antrieb bei Erreichen einer Endlage der Verriegelung betätigt, wobei der Endlagenschalter die Fremdkraftbetätigung des Antriebs untcrbricht. Dadurch kann die Verriegelung weitgehend automatisiert betrieben werden.

Um die Sicherheit zu erhöhen, ist es vorteilhaft, wenn am Antrieb Antriebscingriffsmittel angeordnet sind zum Eingriff mit korrespondierenden Hilfscingriffsmitteln, so dass der Antrieb von Hand betätigbar ist, um die Verriegelung von Hand öffnen und/oder schließen zu können, wobei das Antriebseingriffsmittel bevorzugt als ein auf der Antriebsdrehachse angeordneter Innenmehrkant ausgebildet ist. Solche Hilfseingriffsmittel können beispielsweise Inbusschlüssel, Schraubendreher oder dgl. sein.

Die Kennzeichen und weitere Vorteile der vorliegenden Erfindung werden anhand der Beschreibung bevorzugter Ausführungsbeispiele im Zusammenhang mit den Figuren deutlich werden. Dabei zeigen:
- Fig. 1a bis Fig. 1c: eine erste bevorzugte Ausführungsform der erfindungsgemäßen Verriegelung,
- Fig. 2a bis Fig. 2c: eine zweite bevorzugte Ausführungsform der erfindungsgemäßen Verriegelung,
- Fig. 3 a und Fig. 3b: eine dritte bevorzugte Ausführungsform der Verriegelung und
- Fig. 4a bis Fig. 4c: verschiedene bevorzugte Ausführungsformen des Abtriebs der erfindungsgemäßen Verriegelung nach Fig. 3.

Im Folgenden sind gleiche und ähnliche Elemente mit gleichen bzw. ähnlichen Bezugszeichen versehen, auch wenn dies nicht ausdrücklich dargestellt ist.

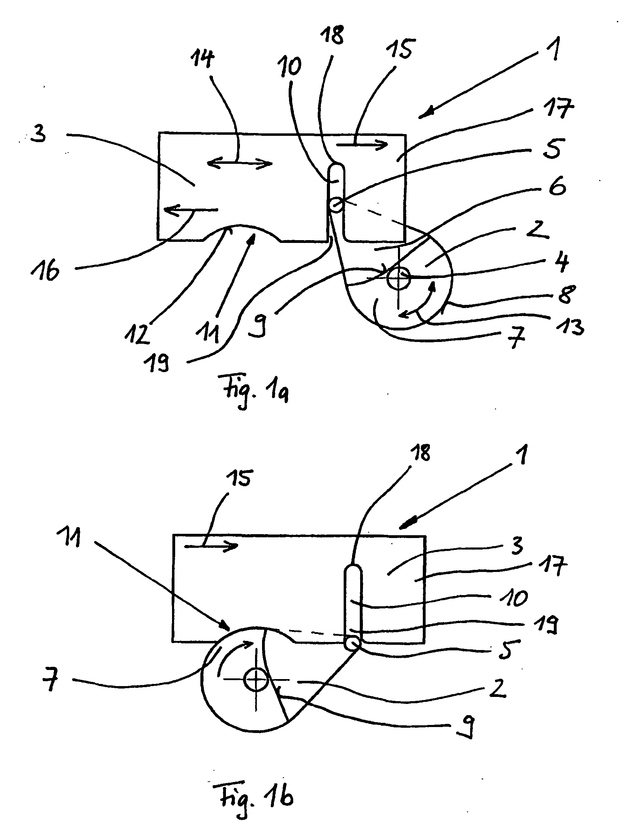

In den Fig. 1a bis Fig. 1c ist rein schematisch eine erste bevorzugte Ausführungsform der erfindungsemäßen Verriegelung 1 in drei verschiedenen Verriegelungsphasen dargestellt.

Die Verriegelung 1 weist einen Antrieb 2 auf, der durch einen Fremdkraftantrieb, beispielsweise einen Motor (nicht gezeigt) betätigt wird, und einen Abtrieb 3. Der Antrieb 2 ist als Hebelrad ausgeführt, das auf der Antriebsdrehachsc 4 drehbeweglich angeordnet ist. Das Hebelrad 2 weist ein Hebelelement 5 auf, das stiftförmig gegenüber der Basis 6 des Hebelrades 2 vorsteht. Weiterhin weist das Hebelrad 2 einen Kreisbogenabschnitt 7 mit einer kreisförmigen Außenkontur 8 auf, der ebenfalls gegenüber der Basis 6 des Hebelrades 2 vorsteht. Zwischen Hebelelement 5 und Antriebsdrchachse 4 ist bereichsweise der Kreisbogenabschnitt 7 durch eine gegenüber der kreisförmigen Außenkontur 8 zu der Antriebsdrehachse 4 hin zurück versetzten Außenkontur 9 begrenzt.

Der Abtrieb 3 weist im Wesentlichen einen rechteckigen Querschnitt auf und besitzt einen Führungsschlitz 10 zur Aufnahme des Hebelelements 5 und eine Einkragung 11 mit einer kreisbogenförmigen konkaven Kontur 12. Die konvexe Kontur 8 des Kreisbogenabschnittes 7 des Antriebs 2 und die konkave Kontur 12 der Einkragung 11 des Abtriebs 3 sind dabei so aneinander angepasst, dass sie in formschlüssigen Eingriff gebracht werden können.

Der Antrieb 2 ist - wie gesagt - auf der Antriebsdrehachse 4 drehbeweglich angeordnet, nämlich in Antriebsbewegungsrichtung 13. Der Abtrieb 3 ist durch geeignete Führungsmittcl (nicht gezeigt) so in Bezug auf den Antrieb 2 festgelegt, dass er nur lateral in Abtriebsbewegungsrichtung 14 bewegbar ist, wobei die Richtung 15 die Schließrichtung und die Richtung 16 die Öffnungsrichtung ist.

Der rechtsseitige Abschnitt des Abtriebs 3 ist als riegelförmiges Schließelement 17 ausgebildet, das in Eingriff mit einem geeigneten Schloss (nicht gezeigt) gebracht werden kann.

Fig. 1a zeigt die Verriegelung 1 in unverriegeltem Zustand, bei dem der Abtrieb 3 durch den Antrieb 2 in beide Richtungen 15, 16 dadurch frei bewegt werden kann, dass das Hebelelement 5 in dem Führungsschlitz 10 läuft und so die Bewegung zwischen Antrieb 2 und Abtrieb 3 überträgt. Andererseits würde auch eine Bewegung des Abtriebs 3 über den Führungsschlitz 10 auf das Hebelelement 5 übertragen werden, wodurch sich der Antrieb 2 gegen den Widerstand des die Antriebsdrehachse 4 antreibenden Fremdkraftantriebs bewegen ließe.

Fig. 1b zeigt die Verriegelung 1 im verriegelten Zustand, bei dem das Schließelement 17 in am weitesten in Schließrichlung 15 ausgefahrener Stellung dargestellt ist. Der Übergang zwischen den Stellungen gemäß Fig. 1a und Fig. 1b ist dadurch erfolgt, dass sich bei Drehen des Antriebs 2 im Uhrzeigersinn das Hebelelement 5 im Führungsschlitz 10 zum Kopf 18 des Führungsschlitzes 10 bewegte und von dort wieder zur Basis 19 des Führungsschlitzes 10. Das laterale Vorbeibewegen des Abtriebs 3 am Kreisbogenabschnitt 7 des Antriebs 2 wird dabei durch den Verlauf der zurück versetzten Außenkontur 9 ermöglicht. Erst ab einer bestimmten lateralen Verschiebungstiefe des Abtriebs 3 gegenüber dem Antrieb 2 greift der Kreisbogenabschnitt 7 formschlüssig in die Einkragung 11 ein, wodurch jeglicher weitere laterale Vorschub des Abtriebs 3 in Schließrichtung 15 verhindert wird. Andererseits befindet sich das Hebelelement 5 immer noch im Eingriff mit Führungsschlitz 10, so dass ein Drehen des Antriebs 2 entgegen dem Uhrzeigersinn zu einer lateralen Verschiebung in Öffnungsrichtung führen würde. Hier liegen sowohl der erste 7, 11 als auch der zweite Formschluss 5, 10 gleichzeitig vor. Auch eine beispielsweise bei einem Zentrifugencrash entstehende Krafteinwirkung auf den Abtrieb 3 könnte eventuell dazu führen, dass durch Kraftübertragung zwischen Formschlitz 10 und Hebelelement 5 eine Bewegung des Antriebs 2 entgegen dem Uhrzeigersinn und damit eine Öffnung der Verriegelung 1 bewirkt werden.

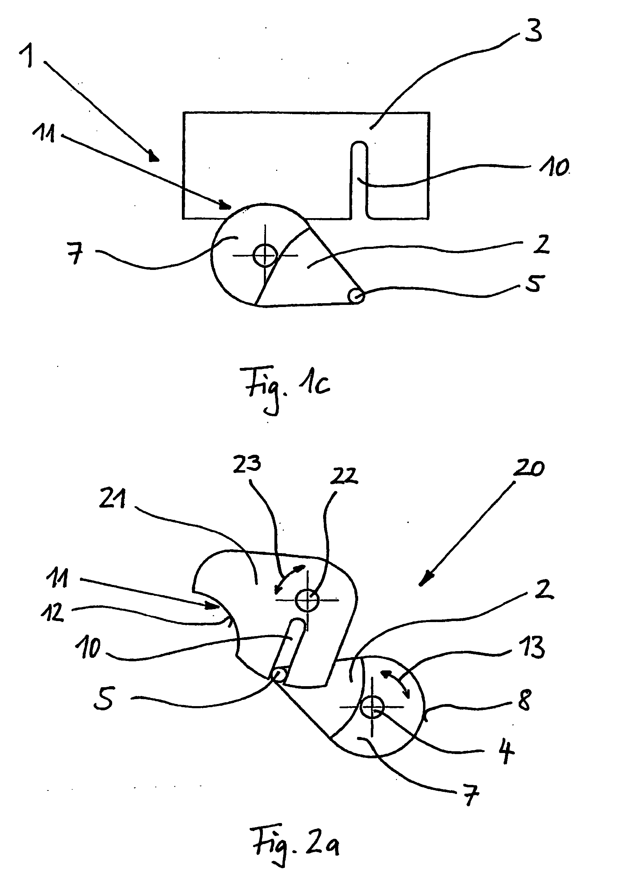

Fig. 1c zeigt schließlich die Verriegelung 1 im verriegelten und blockierten Zustand, wobei dieser verriegelte Zustand selbstblockierend ausgebildet ist. Diese Selbstblockierung wird dadurch bewirkt, dass nun kein Eingriff des Hebelelements 5 mehr in den Führungsschlitz 10, also kein zweiter Formschluss 5, 10 besteht, sondern zwischen Antrieb 2 und Abtrieb 3 nur noch der erste Formschluss zwischen Kreisbogenabschnitt 7 und Einkragung 11 vorliegt. Aufgrund der Bewegungsfreiheitsgrade von Antrieb 2 und Abtrieb 3 und der Ausbildung und Anordnung des Formschlusses zwischen Antrieb 2 und Abtrieb 3 wird wirksam eine Bewegung von Antrieb 2 und Abtrieb 3 verhindert und zwar unabhängig davon, ob die Kraft an Antrieb 2, Abtrieb 3 oder sowohl Antrieb 2 als auch Abtrieb 3 angreift und auch unabhängig davon, wie groß diese angreifende Kraft ist. Erst das kontinuierliche Zurückdrehen des Antriebs 2 in eine Stellung, in der das Hebelelement 5 wieder in den Führungsschlitz 10 eingreift, würde zu einer Entriegelung führen.

Im Fall der erfindungsgemäßen Verriegelung 1 ist also dafür zu sorgen, dass im verriegelten Zustand der Verriegelung 1, in der auch der Abtrieb 3 blockiert ist, kein zweiter Formschluss zwischen Hebelclemcnt 5 und Formschnitt 10 besteht. Bevorzugt sollte sogar eine geringe Bcabstandung zwischen Hebelelement 5 und Führungsschlitz 10 bestehen, so dass auch im Fall großer Kräfte und Vibrationen ein Eintauchen des Hebelelements 5 in den Führungsschlitz 10 unmöglich ist. Die erfindungsgemäße Verriegelung 1 gemäß Fig. 1 ist sehr sicher und dabei auch konstruktiv besonders einfach aufgebaut.

In der Ausgestaltung der erfindungsgemäßen Verriegelung 1 nach Fig. 1a bis Fig. 1c vollführt der Abtrieb 3 eine translatorische Bewegung, während der Antrieb 2 eine Drehbewegung ausführt. Natürlich kann auch die umgekehrte Ausgestaltung eingesetzt werden, wobei dann der Antrieb 2 eine translatorische Bewegung ausführt, während der Abtrieb 3 sich dreht.

In den Fig. 2a bis Fig. 2b ist eine alternative Ausgestaltung der erfindungsgemäßen Verriegelung 20 dargestellt, wobei die verschiedenen Zustände der Verriegelung 20 wiederum analog zu Fig. 1 dargestellt sind. Im Unterschied zur Verriegelung 1 gemäß Fig. 1 weist diese Verriegelung 20 einen Abtrieb 21 auf, der auf einer Abtriebsdrehachse 22 drehbeweglich gelagert ist. Der Abtrieb 21 führt hier also keine laterale Bewegung, sondern eine Rotationsbewegung in Abtriebsbewegungsrichtung 23 aus. Nicht gesondert dargestellt ist bei der Verriegelung 20 das Schließelement, welches aber beispielsweise als Fanghaken ausgebildet sein und in geeigneter Art und Weise an dem Abtrieb 21 angeordnet werden kann.

In Bezug auf die einzelnen Verriegelungsstadien entspricht das Zusammenwirken von Antrieb 2 und Abtrieb 21 demjenigen der Verriegelung 1 nach Fig. 1, so dass hier nicht noch einmal gesondert darauf eingegangen wird.

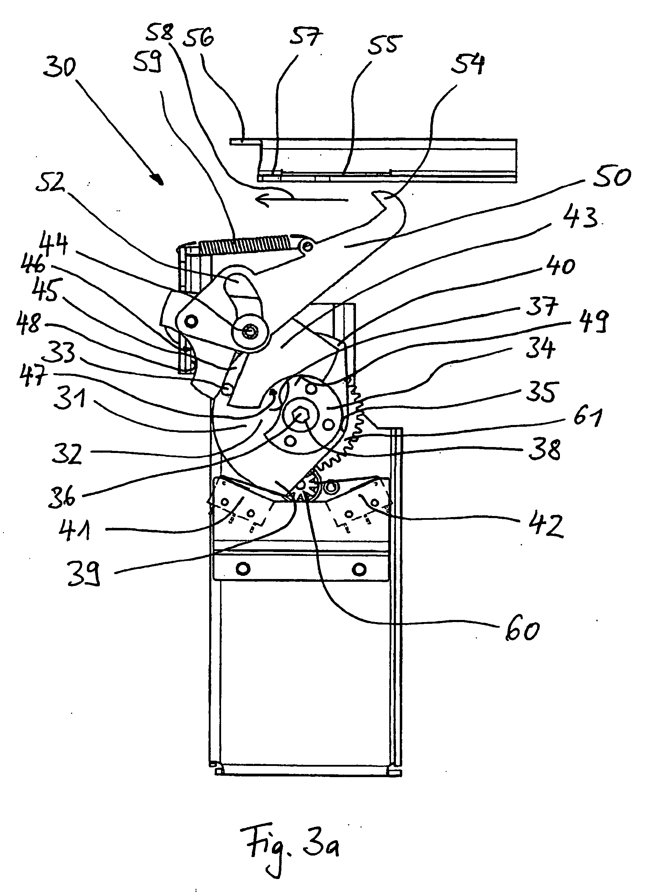

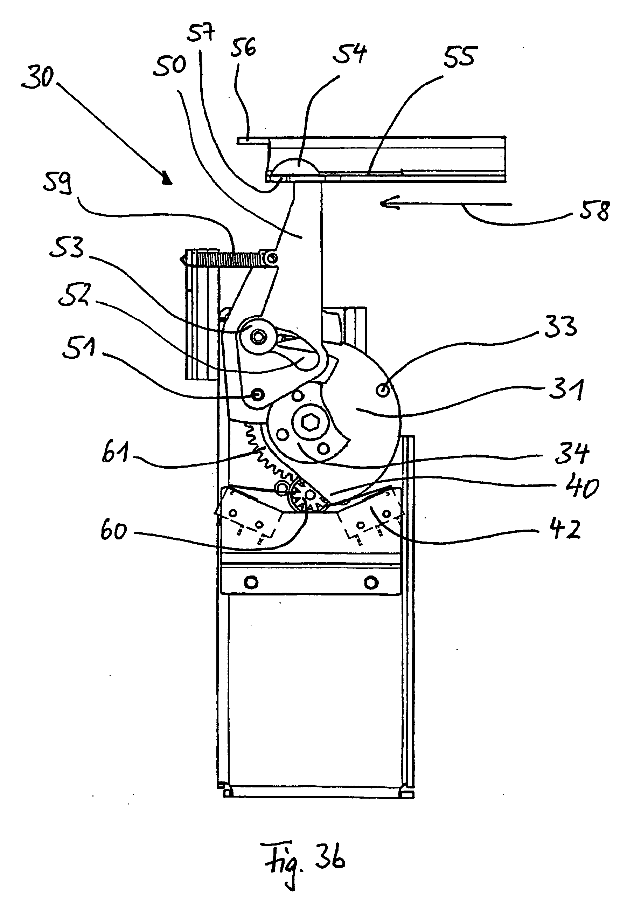

In den Fig. 3a und Fig. 3b ist die erfindungsgemäße Verriegelung 30 in einer besonders bevorzugten Ausgestaltung rein schematisch dargestellt. Die Verriegelung 30 weist als Antrieb ein Hebelrad 31 auf, wobei auf der Basis 32 des Hebelrades 31 wiederum vorstehend ein Hebelelement 33 und ein Kreisbogenabschnitt 34 angeordnet sind. Der Kreisbogenabschnitt 34 weist einen Bereich mit einer kreisförmigen konvexen Außenkontur 35 und zwischen der Antriebsdrehachse 36 und dem Hebel 33 einen Bereich mit einer zur Antriebsdrehachse 36 im Bezug auf die Kreiskontur 35 nach innen zurück versetzten Außenkontur 37 auf. Zusätzlich ist auf der Antriebsdrehachse 36 ein Innensechskant 38 angeordnet. Schließlich weist die Basis 32 des Hebelrades 31 einen unregelmäßigen Verlauf der Außenkontur mit zwei Schaltflächen 39, 40 auf, die angepasst sind, auf Endlagenschalter 41, 42 einzuwirken.

Die Verriegelung 30 weist weiterhin einen Abtrieb 43 auf, der drehbeweglich auf der Abtriebsdrehachse 44 angeordnet ist und einen Führungsschlitz 45 sowie Einkragungen 46, 47 aufweist, die jeweils eine konkave kreisbogenförmige Kontur 48, 49 besitzen. Die konkaven Konturen 48, 49 der Einkragungen 46, 47 sind dabei angepasst, in Formschluss mit der kreisbogenförmigen Kontur 35 des Kreisbogenabschnittes 34 gebracht werden zu können.

Weiterhin weist die Verriegelung 30 als Schließelement einen Fanghaken 50 auf, der drehbeweglich auf der Schließelementdrehachse 51 angeordnet ist, wobei die Schließelementdrehachse 51 nicht mit der Abtriebsdrchachse 44 zusammenfällt. Der Fanghaken 50 weist einen konzentrisch um die Schließelementdrchachse 51 verlaufenden Kreisbogensegementausschnitt 52 auf, in dem ein Führungselement 53 läuft, das auf der Abtriebsdrchachse 44 angeordnet ist.

Der Fanghaken 50 weist eine Klaue 54 auf, die durch den Schlitz 55 des auszugsweise dargestellten Verschlussdeckels 56 einer nicht gezeigten Laborzentrifuge greift und in der verriegelten Stellung gegenüber einem Anschlag 57 wirkt. Der Fanghaken 50 ist in Schließrichtung 58 durch das Federelement 59 vorgespannt.

Der Antrieb 31 wird über die Zahnräder 60, 61 mittels eines nicht gezeigten Motors mit Fremdkraft angetrieben, wobei der Motor mittels der Endlagenschalter 41, 42 zu-und abschaltbar ist.

Im Folgenden wird nun die Funktionsweise der Verriegelung 30 erklärt, wobei in Fig. 3a die Verrieglung 30 im unverriegelten Zustand und in Fig. 3b die Verriegelung 30 im verriegelten und selbstblockierten Zustand dargestellt ist.

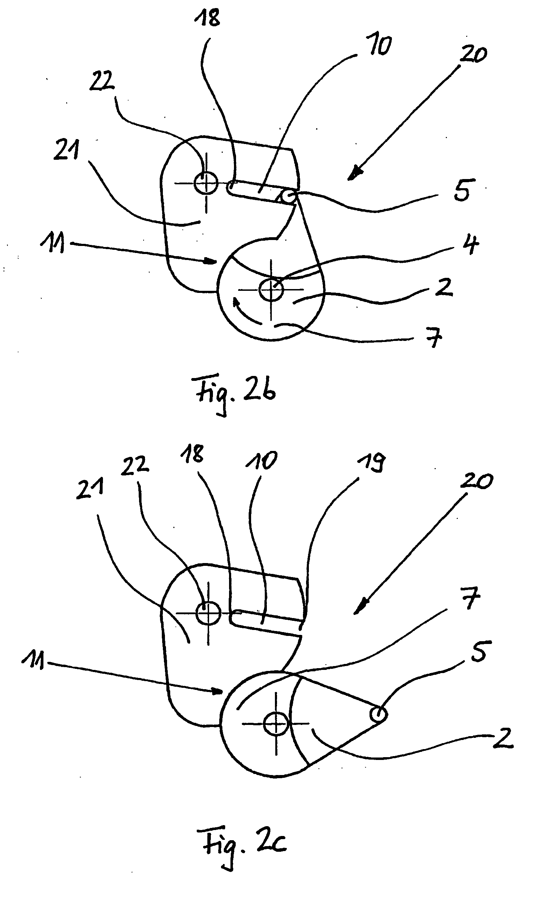

Grundsätzlich entspricht dabei das Zusammenwirken von Antrieb 31 und Abtrieb 43 demjenigen, wie es für die Verriegelungen 1 und 20 gemäß den Fig. 1 und Fig. 2 beschrieben wurde, so dass hier auf eine nochmalige Darstellung verzichtet wird. Neu gegenüber den Verriegelungen 1 und 20 ist dagegen, dass der Abtrieb 43 auch im unverriegelten Zustand einen Formschluss über die Einkragung 47 mit dem Kreisbogenabschnitt 34 des Antriebs 31 bereitstellt.

In Fig. 3a ist zu erkennen, dass im unverriegelten Zustand das Hebelelement 33 noch in Führungsschlitz 45 eingreift und somit den zweiten Formschluss bereitstellt, wcshalb trotz des ersten Formschlusses zwischen Einkragung 47 und Kreisbogenabschnitt 34 keine Selbstblockierung des Abtriebs 43 vorliegt. Diese Selbstblockierung kann allerdings einfach dadurch erreicht werden, dass die Schaltfläche 40 für den Endlagenschalter 41 näher an das Hebelelement 33 hcrangesetzt wird, so dass die Endlage erst dann erreicht wird, wenn das Hebelelement 33 den Führungsschlitz 45 verlassen hat.
Auf diese Weise wird mit der Verriegelung sowohl im unverriegelten als auch im verriegelten Zustand eine Selbstblockierung des Abtriebs 43 erreicht, so dass wiederum jegliche ungewollte Bewegung des Abtriebs 43 und/oder des Antriebs 31 auch bei großen Krafteinwirkungen von außen wirksam und sicher verhindert wird.

Durch die drehbewegliche Anordnung des Fanghakens 50 an dem Abtrieb 43 und dessen Führung über das Kurvensegment 52 an dem Führungselement 53 wird durch die über das Federelement 59 in Schließrichtung 58 bereit gestellte Vorspannung erreicht, dass der Fanghakcn 50 beim Übergang vom unverriegelten zum verriegelten Zustand eine von der Kreisform abweichende Bewegung vollzieht. Genauer gesagt schließt sich an eine anfänglich kreisförmige Bewegung um die Drehachse 51 des Abtriebs 43 eine die Klaue 54 in Richtung auf den Antrieb 31 ziehende Bewegung an, ohne dass der Fanghaken 50 weiter in Schließrichtung 58 bewegt wird. Dadurch wird der Deckel 56 während der Verriegelung fest auf ein Dichtungselement gepresst (nicht gezeigt), das an dem nicht gezeigten Gehäuse der Laborzentrifuge angeordnet ist. Die Verriegelung 30 ist dabei so ausgebildet, dass der selbstblockierte Zustand, in dem der zweite Formschluss zwischen Antrieb 31 und Abtrieb 43 aufgelöst wird, dann eintritt, wenn der Deckel 56 seine gewünschte Endstellung auf dem Gehäuse erreicht hat.

Bezüglich der genauen Funktionsweise und weiteren möglichen Ausgestaltungen des Zusammenwirkens zwischen Fanghaken 50 und Abtrieb 43 wird auf die DE 100 15 010 C2 verwiesen, deren Inhalt und Lehre vollumfänglich in die vorliegende Beschreibung mit aufgenommen wird. Alle dort beschriebenen Merkmale für das Zusammenwirken von Fanghakcn 50 und Abtrieb 43 sind also auch in der vorliegenden Erfindung vorteilhaft einsetzbar.

Bezüglich der DE 100 15 010 C2 ist noch anzumerken, dass darin zwar angegeben ist, dass die dort dargestellte Verriegelung selbsthemmend wirkt, nämlich zum einen dadurch, dass die Drehachse des Fanghakens im verriegelten Zustand über die Verlängerung einer Geraden durch die vordere Kante des Anschlags und das Führungselement hinaus geschwenkt ist und des weiteren ein weiterer Beitrag durch den Antriebsmotor und das Antriebsgetriebe gebildet wird. Hierbei handelt es sich allerdings ersichtlich nur um eine Hemmung, jedoch keine Selbstblockierung der Verriegelung, da bei geeigneter Krafteinwirkung auf den Fanghaken, nämlich entgegen der Schließrichtung, ein Drehen des Abtriebs im Uhrzeigersinn bewirkt wird, das von dem Antrieb sowie Motor und Getriebe zwar gehemmt, jedoch nicht verhindert werden kann.

Obwohl die Erfindung vorstehend anhand einer Verriegelung 1, 20, 30 eines Verschlusses für eine Zentrifuge, insbesondere einer Laborzentrifuge beschrieben wurde, ist die erfindungsgemäße Verriegelung 1, 20, 30 selbstverständlich auch für andere Vorrichtungen und Einrichtungen vorteilhaft einsetzbar. Vor allem immer dann, wenn das Schließelement nicht manipulierbar sein soll, wie zum Beispiel bei Sicherungstüren, Tresoren, Kältekammern und dgl.

Besonders bemerkenswert ist an der erfindungsgemäßen Verriegelung 1, 20, 30, dass sie stromlos und rein mechanisch selbstblockierend ausgelegt ist und damit auch stärksten Vibrationen und Crashenergien standhält. Mit der erfindungsgemäßen Verriegelung 1, 20, 30 ist auch nur ein Fremdkraftantrieb erforderlich, weil sowohl der Verriegelungs- als auch der Blockicrungsvorgang kontinuierlich nacheinander mittels des Antriebs 2, 31 erzeugt werden.

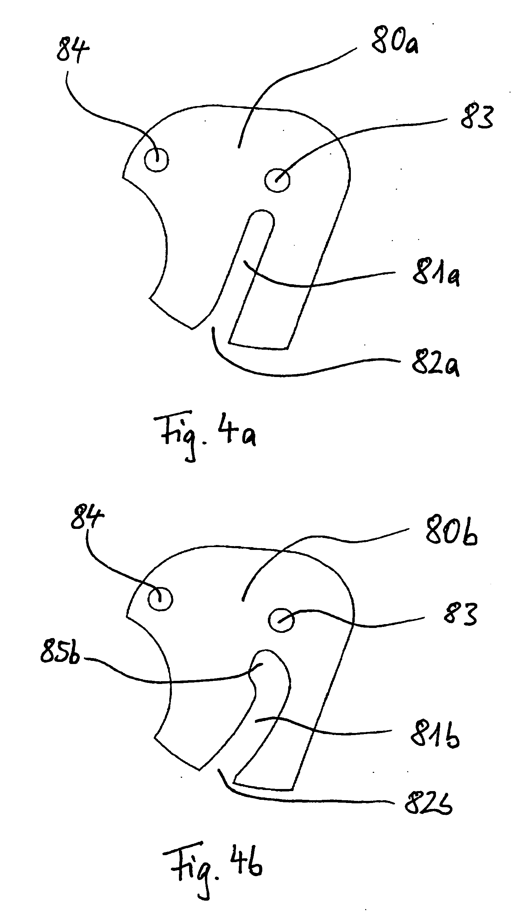

In den Fig. 4a bis Fig. 4e sind schließlich bevorzugte Ausgestaltungen des erfindungsgemäßen Abtriebs 80a, 80b, 80s, 80d, 80e dargestellt, die in der erfindungsgemäßen Verriegelung 30 nach Fig. 3 Verwendung finden können, wobei jeweils der Führungsschlitz 81a, 81b, 81s, 81d, 81e etwas modifiziert ausgebildet ist.

In Fig. 4a ist ein Abtrieb 80a dargestellt, dessen Führungsschlitz 81a an der Basis 82a einseitig an der linken Seite abgerundet ausgebildet ist, wodurch sich das Ein- und Ausbringen des Hebelelements 33 aus dem Führungsschlitz 81a reibungsloser gestaltet. Vorteilhaft kann natürlich auch auf der anderen Seite eine Abrundung vorgesehen sein. Weiterhin weist der Abtrieb 80a eine Bohrung 83 zur Aufnahme der Abtriebsdrehachse 44 und eine weitere Bohrung 84 zur Aufnahme der Schließelementdrehachsc 51 auf. Durch die geradlinige Ausbildung des Führungsschlitzes 81a ergeben sich sinusförmige Geschwindigkeits- und Drehmomentverläufe.

In Fig. 4b ist ein Abtrieb 80b dargestellt, dessen Führungsschlitz 81b an der Basis 82b beidseitig abgerundet ausgebildet ist, wodurch sich das Ein- und Ausbringen des Hebelelements 33 aus dem Führungsschlitz 81b reibungsloser gestaltet. Zusätzlich weist der Abtrieb 80b eine Ausrundung 85b in Richtung zur Bohrung 84 zur Aufnahe der Schließelementdrchachse 51 hin auf, wodurch ein geringeres Antriebsdrehmoment in bestimmten Hebelstellungen gegenüber dem Antrieb aus Fig. 4a notwendig ist. Zusätzlich ist der Führungsschlitz 81b zwischen Basis 82b und Ausrundung 85b in Bezug auf die Bohrung 83 zur Aufnahe der Abtriebsdrehachse 44 von der Bohrung 84 zur Aufnahe der Schließelementdrehachse 51 weggeneigt. Dadurch weist der Führungsschlitz 81b zumindest bereichsweise keine senkrecht zur Bewegungsrichtung des Abtriebs 80b verlaufende Führungsflächen auf, wodurch sich die Hebelverhältnisse beim Schließ- und Öffnungsvorgang verbessern.

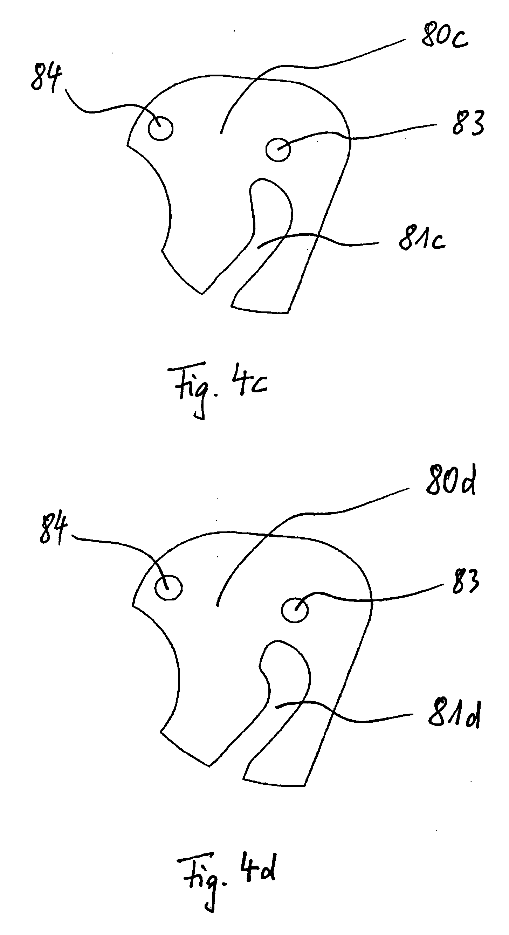

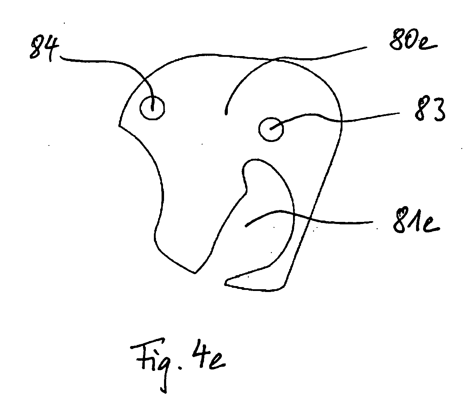

Die in Fig. 4 c bis Fig. 4c gezeigten Abtriebe 80c, 80d, 80c weisen Führungsschlitze 81c, 81d, 81e mit speziell angepassten Gestaltungen der Inncnkonturcn auf, wodurch besondere Anpassungen an Hebelverhältnisse bei Schließ- und Öffnungsvorgang vorgenommen werden. Durch die Form der Führungsschlitze werden die Größe des Drehmomentes und die Bewegungsgeschwindigkeit des Abtriebs in jedem einzelnen Punkt der Bewegung der Verriegelung festgelegt.

Durch einen besonderen Verlauf des Führungsschlitzes 81b, 81c, 81d, 81e kann also eine genaue Anpassung des Drehmoments und der Geschwindigkeit für die einzelnen Phasen des Öffnungs- und Schließvorgangs vorgenommen werden. Aufgrund der Stellung der Führungsschlitze 81a, 81b, 81c, 81d, 81e in Bezug auf die Bohrung 83 zur Aufnahe der Abtriebsdrehachse 44 und der Bohrung 84 zur Aufnahe der Schließelementdrehachse 51 legen der Verlauf der rechten Flanke jeweils Drehmoment- und Geschwindigkeitsverläufe beim Schließen und der Verlauf der linken Flanke jeweils Drehmoment- und Geschwindigkeitsverläufe beim Öffnen der Verriegelung 30 fest. Aus den vorstehenden Ausführungen ist deutlich geworden, dass mit der erfindungsgemäßen Verschlussverriegelung 1, 20, 30 eine besonders effektive, belastbare und sichere Verriegelung 1, 20, 30 ermöglicht wird, die mit nur einem Fremdkraftantrieb betätigbar ist und bei der eine auch starken Vibrationen und Crashenergien gegenüber robuste Selbstblockierung stattfindet.

## Patentansprüche

1. Verriegelung (1; 20; 30) eines Verschlusses, bevorzugt eines Verschlusses einer Zentrifuge, insbesondere einer Laborzentrifuge, umfassend mindestens ein Schließelement (17; 50), das in einer Schlicßalemantbewegnngsächtung bewegbar ist, und mindestens einen Antrieb (2; 31) zum Verstellen des Schließelements (17; 50) zwi-schen einer unverriegelten Position zur Versetzung des Verschlusses in einen unverriegelten Zustand und einer verriegelten Position zur Versetzung des Verschlusses in einen verriegelten Zustand, wobei der Antrieb in einer Antriebsbewegungsrichtung bewegbar angeordnet ist, wobei die Verriegelung (1; 20; 30) einen blockierten Zustand aufweist, in dem das Schließelement gegenüber Bewegungen in Schließelementbewegungsrichtung blockiert ist, **dadurch gekennzeichnet, dass** das Schließelement (17; 50) an einem Abtrieb (3; 21; 43) angeordnet ist, der in einer Abtriebsbewegungsrichtung bewegbar angeordnet ist und der mit dem Antrieb (2; 31) zumindest im blockierten Zustand in einem ersten Formschlelssigen Eingriff (11, 7; 34, 48) steht, wobei der erste formschlüssige Eingriff (11, 7; 34, 48) so ausgebildet ist, dass er keine Bewegungsilbertragung zwischen der Abtriebsbewegungsrichtung und der Antriebsbewegungsrichtung vermittelt, und wobei zwischen Antrieb (2; 31) und Abtrieb (3; 21; 43) ein zweiter Form- (5, 10; 33, 45) und/oder Kraftschluss vorgesehen ist zur Vermittlung der Bewegungsübertragung zwischen der Abtriebsbewegungsrichtung und der Antriebsbewegungsrichtung, wobei der zweite Form- (5, 10; 33, 45) und/oder Kraftschluss zumindest im blockierten Zustand nicht besteht, so dass eine Selbstblockierung der Verriegelung (1; 20; 30) zumindest im blockierten Zustand bewirkt wird.

2. Verriegelung (1; 20; 30) nach Anspruch 1, **dadurch gekennzeichnet, dass** der Abtrieb (21; 43) um eine Abtriebsdrehachse (22; 44) und/oder der Antrieb (2; 31) um eine Antriebsdrehachse (4; 36) drehbar gelagert sind.

3. Verriegelung (1; 20; 30) nach einem der vorherigen Ansprüche, dadurch gekennzeichnen dass zur Ausbildung des zweiten Formschlusses und/oder Kraftschlusses der Abtrieb (3; 21; 43) einen Führungsschlitz (10; 45) für ein Hebelelement (5; 33) eines am Antrieb angeordneten Hebelrades (2; 31) aufweist, wobei der Führungsschlitz bevorzugt zumindest einen Bereich aufweist, der in Bezug auf die Bcwcgungsrichtung des Abtriebs zumindest einen nichtsenkrecht verlaufenden Wandabschnitt aufweist.

4. Verriegelung (1; 20; 30) nach einem der vorherigen Ansprüche, **dadurch gekennzeichnet, dass** der Antrieb (2; 31) einen kreisbogenförmigen Abschnitt (8; 35) aufweist, der zumindest im verriegelten Zustand der Verriegelung (1; 20; 30) zur Ausbildung des ersten Formschlusses in einen korrespondierenden Abschnitt (12; 47, 48) des Abtriebs (3; 21; 43) formschlüssig eingreift.

5. Verriegelung (1; 20; 30) nach Anspruch 4 in Verbindung Anspruch 3, **dadurch gekennzeichnet, dass** zwischen Hebelelement (5; 33) und Antrichsdrchachse (4; 36) zumindest bereichsweise der Kreisbogen nicht ausgebildet ist, so dass der Abtrieb zumindest zeitweise beim Übergang zwischen blockiertem Zustand und unverriegeltem Zustand nicht in formschlüssigem Eingriff mit dem Antrieb steht.

6. Verriegelung (30) nach einem der vorherigen Ansprüche, **dadurch gekennzeichnet, dass** das Schließelement (50) beweglich mit dem Abtrieb (43) verbunden ist.

7. Verriegelung (30) nach Anspruch 6, **dadurch gekennzeichnet, dass** das Schließelement (50) um eine Schließelementdrehachse (51) drehbeweglich an dem Abtrieb (43) angeordnet ist, wobei Schließelementdrehachse (51) und Abtriebsdrehachse (44) nicht zusammenfallen, der Abtrieb (43) ein Führungselement (53) aufweist, das in ein konzentrisch zur Schließelementdrehachse (51) angeordnete Kreisbogensegmentausschnitt (52) des Schließelements (50) eingreift, und das Schließelement (50) in Schließrichtung (58) vorgespannt (59) ist.

8. Verriegelung (1) nach einem der Ansprüche 1 bis 5, **dadurch gekennzeichnet, dass** das Schließelement fest mit dem Abtrieb (3) verbunden ist, insbesondere Teil des Abtriebs (3) ist.

9. Verriegelung (30) nach einem der vorherigen Ansprüche, **dadurch gekennzeichnet, dass** dem Antrieb (31) zumindest ein Endlagenschalter (41, 42) zugeordnet ist, den der Antrieb (31, 39, 40) bei Erreichen einer Endlage der Verriegelung (30) betätigt, wobei der Endlagenschalter (41, 42) die Fremdkraftbetätigung des Antriebs (31) unterbricht.

10. Verriegelung (30) nach einem der vorherigen Ansprüche, **dadurch gekennzeichnet, dass** am Antrieb (31) Antriebseingriffsmittel (38) angeordnet sind zum Eingriff mit korrespondierenden Hilfseingriffsmitteln, so dass der Antrieb von Hand betätigbar ist, um die Verriegelung (30) von Hand öffnen und/oder schließen zu können, wobei das Antriebseingriffsmittel (38) bevorzugt als auf der Antriebsdrchachse (36) angeordneter Innenmehrkant (38) ausgebildet ist.

## Claims

1. A locking device (1; 20; 30) for a closure, preferably for a closure for a centrifuge, in particular a lab centrifuge, comprising:
at least one closing element (17; 50) that is movable in a closing element movement direction; and
at least one actuator (2; 31) for moving the closing element (17; 50) between an unlocked position for placing the closure into an unlocked condition and a locked position for placing the closure into a locked condition,
wherein the actuator is arranged movable in an actuator movement direction,
wherein the locking device (1; 20; 30) has a blocked condition in which the closing element is blocked relative to movements in the closing element movement direction,
wherein the closing element (17, 50) is arranged at an drive side (3; 21; 43)
that is arranged moveable in an drive side movement direction and that is connected with the actuator (2; 31) at least in a blocked condition through a first form locking engagement (11, 7; 34, 48),
wherein the first form locking engagement (11, 7; 34, 48) is configured so that it does not provide any movement transfer between the drive side movement direction and the actuator movement direction,
wherein a second form locking engagement (5, 10; 33, 45) and/or friction locking engagement is provided between the actuator (2; 31) and the drive side (3; 21; 43) for providing a movement transfer between the drive side movement direction and the actuator movement direction, and
wherein the second form locking engagement (5, 10; 33, 45) and/or friction locking engagement is not provided at least in the blocked condition so that a self blocking of the locking device (1; 20; 30) is caused at least in the blocked condition.

2. The locking device (1; 20; 30) according to claim 1, wherein the drive side (21; 43) is rotatably supported about a drive side rotation axis (22; 44) and/or the actuator (2;31) is rotatably supported about an actuator rotation axis (4; 36).

3. The locking device (1; 20; 30) according to one of the preceding claims,
wherein the actuator (3; 21; 43) includes a guide slot (10; 45) for a lever element (5; 33) of a lever wheel (2; 31) arranged at the actuator in order to provide the second form locking engagement and/or friction locking engagement,
wherein the guide slot preferably includes at least one portion which includes at least one wall section that is not orthogonal with reference to the drive side movement direction.

4. The locking device (1; 20; 30) according to one of the preceding claims, wherein the actuator (2; 31) includes a circular arc shaped section (8; 35) which at least in a locked condition of the locking device (1; 20; 30) engages a corresponding section (12; 47, 48) of the drive side (3; 21; 43) in a form locking manner for forming the first form locking engagement.

5. The locking device (1; 20; 30) according to claim 4 in combination with claim 3, wherein the circular arc is not provided at least in portions between the lever element (5; 33) and the actuator rotation axis (4; 36) so that the drive side is not in form locking engagement with the actuator at least temporarily during a transition between the locked condition and the unlocked condition.

6. The locking device (30) according to one of the preceding claims, wherein the closure element (50) is movably connected with the drive side (43).

7. The locking device (30) according to claim 6,
wherein the closing element (50) is arranged at the drive side (43) so that the closing element is rotatable about a closing element rotation axis (51),
wherein the closing element rotation axis (51) and the drive side rotation axis (44) do not coincide, and
wherein the drive side (43) includes a guide element (53) which engages a circular arc segment shaped cutout (52) of the closing element (50) which circular arc segment shaped cutout is arranged concentric to the closing element rotation axis (51), and
wherein the closing element (50) is preloaded in closing direction (58).

8. The locking device (1) according to one of the claims 1 through 5, wherein the closing element is fixated at the drive side (3), in particular is a portion of the drive
side (3).

9. The locking device (30) according to one of the preceding claims,
wherein at least one end position switch (41, 42) is associated with the actuator (31),
wherein the actuator (31, 39, 40) actuates the at least one end position switch when reaching an end position of the locking device (30),
wherein the end position switch (41, 42) interrupts the external force actuation of the actuator (31).

10. The locking device (30) according to one of the preceding claims,
wherein actuator engagement devices (38) are arranged at the actuator (31) for engaging corresponding auxiliary engagement devices so that the actuator is actuatable by hand in order to be able to open and/or close the locking device (30) by hand,
wherein the actuator engagement device (38) is preferably configured as an inner polygon (38) that is arranged on the actuator rotation axis (36).

## Revendications

1. Verrouillage (1 ; 20 ; 30) d'une fermeture, de préférence d'une fermeture d'une centrifuge, en particulier d'une centrifuge de laboratoire, comprenant au moins un élément de fermeture (17 ; 50), qui est mobile dans un sens de mouvement de l'élément de fermeture, et au moins un entraînement d'entrée (2 ; 31) pour commuter l'élément de fermeture (17 ; 50) entre une position non verrouillée pour placer la fermeture dans un état non verrouillé et une position verrouillée pour placer la fermeture dans un état verrouillé, dans lequel l'entraînement d'entrée est disposé de manière mobile dans un sens de mouvement de l'entraînement d'entrée, dans lequel le verrouillage (1 ; 20 ; 30) présente un état bloqué, où l'élément de fermeture est bloqué contre des mouvements dans le sens de mouvement de l'élément de fermeture, **caractérisé en ce que** l'élément de fermeture (17, 50) est disposé sur un entraînement de sortie (3 ; 21 ; 43), qui est disposé de manière mobile dans un sens de mouvement de l'entraînement de sortie et qui se trouve dans un premier engagement par complémentarité de forme (11, 7 ; 34, 48) avec l'entraînement d'entrée (2 ; 31) au moins à l'état bloqué, dans lequel le premier engagement par complémentarité de forme (11, 7 ; 34, 48) est réalisé de telle sorte qu'il ne transmet aucun mouvement entre le sens de mouvement de l'entraînement de sortie et le sens de mouvement de l'entraînement d'entrée, et dans lequel un deuxième engagement par complémentarité de forme (5, 10 ; 33, 45) et/ou par enfoncement forcé est prévu entre l'entraînement d'entrée (2 ; 31) et l'entraînement de sortie (3 ; 21 ; 43) pour la transmission du mouvement entre le sens de mouvement de l'entraînement de sortie et le sens de mouvement de l'entraînement d'entrée, dans lequel le deuxième engagement par complémentarité de forme (5, 10 ; 33, 45) et/ou par enfoncement forcé ne subsiste pas au moins à l'état bloqué, si bien qu'un auto-blocage du verrouillage (1 ; 20 ; 30) est engendré au moins à l'état bloqué.

2. Verrouillage (1 ; 20 ; 30) selon la revendication 1, **caractérisé en ce que** l'entraînement de sortie (21 ; 43) est mobile autour d'un axe de rotation de l'entraînement de sortie (22 ; 44) et/ou que l'entraînement d'entrée (2 ; 31) est mobile autour d'un axe de rotation de l'entraînement d'entrée (4 ; 36).

3. Verrouillage (1 ; 20 ; 30) selon l'une quelconque des revendications précédentes, **caractérisé en ce que** l'entraînement de sortie (3 ; 21 ; 43) présente une fente de guidage (10 ; 45) pour un élément de levier (5 ; 33) d'une roue à levier (2 ; 31) disposée sur l'entraînement d'entrée en vue de réaliser le deuxième engagement par complémentarité de forme et/ou par enfoncement forcé, dans lequel la fente de guidage présente de préférence une zone présentant au moins une partie de paroi non perpendiculaire au sens de mouvement de l'entraînement de sortie.

4. Verrouillage (1 ; 20 ; 30) selon l'une quelconque des revendications précédentes, **caractérisé en ce que** l'entraînement d'entrée (2 ; 31) présente un segment en arc de cercle (8 ; 35) lequel, au moins à l'état verrouillé du verrouillage (1 ; 20 ; 30), s'engrène par complémentarité de forme dans une partie correspondante (12 ; 47, 48) de l'entraînement de sortie (3 ; 21 ; 43) en vue d'obtenir le premier engagement par complémentarité de forme.

5. Verrouillage (1 ; 20 ; 30) selon la revendication 4 en liaison avec la revendication 3, **caractérisé en ce que** l'arc de cercle n'est pas formé au moins dans certaines zones entre l'élément de levier (5 ; 33) et l'axe de rotation de l'entraînement d'entrée (4 ; 36), si bien que l'entraînement de sortie, lors de la transition entre l'état bloqué et l'état non verrouillé, ne se trouve pas, au moins temporairement, en engagement par complémentarité de forme avec l'entraînement d'entrée.

6. Verrouillage (30) selon l'une quelconque des revendications précédentes, **caractérisé en ce que** l'élément de fermeture (50) est relié de manière mobile avec l'entraînement de sortie (43).

7. Verrouillage (30) selon la revendication 6, **caractérisé en ce que** l'élément de fermeture (50) est disposé sur l'entraînement de sortie (43) de manière rotative autour d'un axe de rotation de l'élément de fermeture (51), dans lequel l'axe de rotation de l'élément de fermeture (51) et l'axe de rotation de l'entraînement de sortie (44) ne coïncident pas, l'entraînement de sortie (43) présente un élément de guidage (53) qui s'engrène dans une partie d'un segment d'arc de cercle (52) disposé concentriquement autour de l'axe de rotation (51) de l'élément de fermeture (50), et l'élément de fermeture (50) est sous précontrainte (59) dans le sens de fermeture (58).

8. Verrouillage (1) selon l'une quelconque des revendications 1 à 5, **caractérisé en ce que** l'élément de fermeture est relié fermement avec l'entraînement de sortie (3), en particulier qu'il forme une seule pièce avec l'entraînement de sortie (3).

9. Verrouillage (30) selon l'une quelconque des revendications précédentes, **caractérisé en ce qu'**au moins un interrupteur de fin de course (41, 42) est associé à l'entraînement d'entrée (31), lequel interrupteur actionne l'entraînement d'entrée (31, 39, 40) lorsque la position finale du verrouillage (30) est atteinte, dans lequel l'interrupteur de fin de course (41, 42) interrompt l'actionnement par une force extérieure de l'entraînement d'entrée (31).

10. Verrouillage (30) selon l'une quelconque des revendications précédentes, **caractérisé en ce que** des moyens d'engrènement (38) de l'entraînement d'entrée sont disposés au niveau de l'entraînement d'entrée (31) pour permettre l'engrènement avec des outils d'engrènement correspondants, si bien que l'entraînement d'entrée peut être actionné manuellement afin d'ouvrir et/ou de fermer manuellement le verrouillage (30), dans lequel le moyen d'engrènement (38) de l'entraînement d'entrée est réalisé de préférence sous la forme d'un polygone interne (38) disposé sur l'axe de rotation de l'entraînement d'entrée (36) .
